# EUROPEAN PATENT APPLICATION

(11) **EP 4 811 100 A1**
(43) Date of publication of application: **23.09.2026**
(21) Application number: 25165399.4
(22) Date of filing: 21.03.2025
(51) Int. Cl.: G06F 3/12, G06F 3/0481, H04N 1/00, G03G 15/00

(54) **USER INTERFACE AND A METHOD OF CONTROLLING THE USER INTERFACE**

(71) Applicant: Canon Production Printing Holding B.V., 5914 HH Venlo (NL)
(72) Inventor: HAGENS,Pascal A.M.S., Venlo (NL); VAN KNIPPENBERG, René M.D., Venlo (NL)
(74) Representative: Canon Production Printing IP Department

(57) **Abstract**

A user interface for a printer, the user interface having a screen and being arranged to display a plurality of display items on the screen simultaneously in a configurable layout. The layout specifies at least one of a selection of display items to be displayed simultaneously and a configuration of frames to be displayed that are related to the display items,. Each display item is related to a data object for a printing device. Each data object has a fluent level relative to a window of opportunity for an efficient use of the printing device. A size of a frame dynamically corresponds to the fluent level relative to the window of opportunity of a data object related to a selected display item.

## Description

The invention relates to a user interface for a printer, the user interface having a screen and being arranged to display a plurality of display items on the screen simultaneously in a configurable layout, the layout specifying at least one of a selection of display items to be displayed simultaneously and a configuration of frames to be displayed that are related to the display items.

Screen-based graphic user interfaces are frequently used for operating electronically controlled apparatus or systems such as, for example, a document processing system or a printing system. Depending upon the complexity of the system, the user interface may be used to display print job attributes and print job settings of print jobs which are received by the printing system.

Existing methods for presenting complex and dynamic information on a user interface of a printer often overwhelm users, limiting their ability to quickly interpret data and make informed decisions. Traditional presentation models rely on static or linear formats, which makes it hard to read changing variables like print job settings and attributes in real time. Furthermore, these models frequently impede user agency, leading to decision-making processes that are overly reliant on predefined pathways or external inputs. This lack of adaptability and user independence hinders efficiency, especially in high-stakes or time-sensitive environments.

It is an object of the invention to provide a user interface which is configured to overcome the above-mentioned problems.

In order to achieve that object, a user interface according to claim 1 is provided. According to the present invention, a display item on the user interface is related to a data object for a printing device. The data object has a fluent level relative to a window of opportunity for an efficient use of the printing device.

Print tasks such as jobs, loading paper, replenishment of ink or the unloading of printed matter are placed in a specific order of the plurality of frames related to the display items. Tasks are interdependent and the order of the tasks is subject to change.

The order of tasks is parametrized, but not all parameters are known, and some are known only by the operator. The operator shall not be a mere assistant to the system. The human machine interface according to the present invention aims to allow the operator to work as efficiently as possible.

The operator is enabled to assess the optimum by taking into account his idea of efficiency, e.g. the desire to walk as little as possible between tasks, have the printer be idle as little as possible etc.

To enable this the system reveals windows of opportunity as an attribute of data objects. These data objects can be planned events, media definitions, job representations, ink fill-indicators etc. A window of opportunity, also called a margin of opportunity or critical window, may be defined as a period of time during which some action can be taken that will achieve a desired outcome. Once this period is over, or the "window is closed", the specified outcome is no longer possible.

The windows of opportunity are for example corresponding to a strategic opening of the user interface screen, a timeslot for available actions, an availability of print media, or an actionability of the printer and the operator.

According to the present invention a size of a frame dynamically corresponds to the fluent level relative to the window of opportunity of a data object related to a selected display item. For example conditional shaping the frames based on operator input, for example based on a selection of a display item of the data object, is combined with parameters as size, amount, time or proximity.

The frames have a consistent presentation and are recognizable by aspects as; shape, colour, contrast, symbol or motion. The present invention concerns shape shifting frames. Upon selection of a display item related to a data object, frames can grow or shrink in size relative to their efficiency potential with respect to the data object. Depending on which data object has focus, i.e. is selected, the associated window of opportunity is revealed by an increase or decrease in size of the frames, to emphasize it's receptiveness. For example, if the associated window of opportunity is large, the size of the frame is increased and if there is no connection possible the size of the frame is decreased.

The shape shifting frames are not unlike attention warnings, albeit less urgent as it presents a suggestion rather than an obligation.

According to an embodiment a first dimension of a frame is time related and a second dimension of a frame is automatically scaled upon a change of the window of opportunity due to selection of a display item related to the data object and relatively to sizes of the other frames.

According to an embodiment the second dimension of the frame is a width or a length of the frame.

According to an embodiment an increase of the width of the frame results in a decrease of a width of at least one neighbouring frame and a decrease of the width of the frame results in an increase of a width of at least one neighbouring frame.

According to an embodiment a total width of the frames remains the same after the increase or decrease of the width of the frame.

According to an embodiment an increase of the length of the frame results in a decrease of a length of at least one neighbouring frame and a decrease of the length of the frame results in an increase of a length of at least one neighbouring frame.

According to an embodiment a total length of the frames remains the same after the increase or decrease of the length of the frame.

The present invention also relates to a method for a printer having a user interface according to the present invention, wherein the method comprises the steps of simultaneously displaying the display items, related to data objects, and the frames on the user interface screen, selecting a display item related to a data object, and automatically and relatively scaling the size of the frames according to the changed window of opportunity for the data object.

The present invention also relates to a printer comprising a user interface according to the present invention, wherein the printer comprises a print controller for controlling the printing of print jobs, and a print engine to eject marking material on print media prescribed by the print jobs, and wherein the print controller controls the scheduling and printing of the print jobs as data objects related to display items shown on the user interface screen, and wherein the print controller is configured to execute the steps of a method according to the present invention.

The present invention also relates to a software product comprising program code on a machine-readable medium, which program code, when loaded into a control system of a printer having a user interface according to the present invention, causes the printer to execute the steps of the method according to the present invention.

Embodiment examples will now be described in conjunction with the drawings, wherein:
- Fig. 1: is a block diagram of a system to be controlled, and an associated user interface according to the present invention;
- Figs. 2 - 4: are views of a screen of the user interface with different layouts according to the present invention;
- Fig. 5: is a flow diagram of a method according to the present invention; and
- Fig. 6: a diagram of a software product according to the present invention.

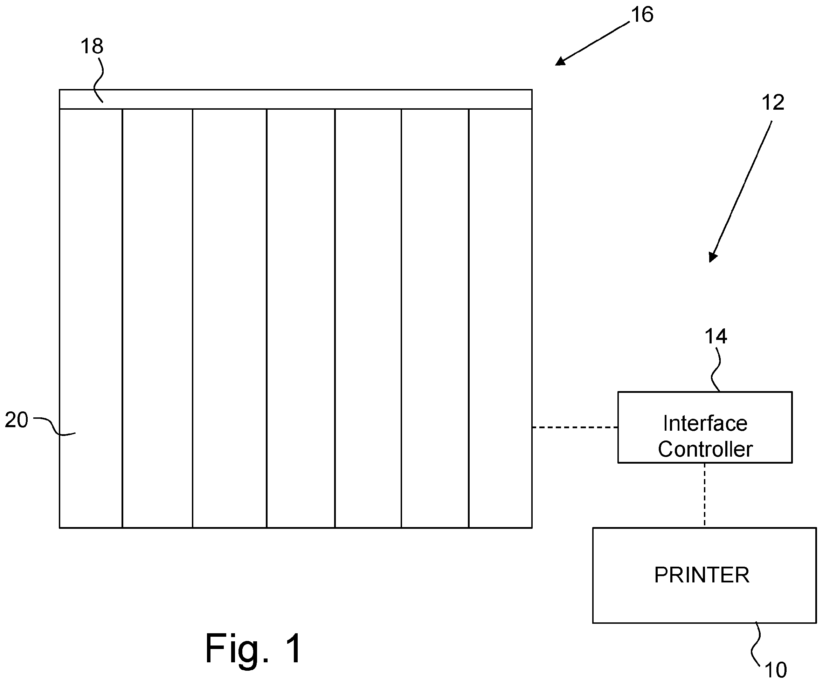

Fig. 1 is a block diagram in which a system to be controlled, the system being a printing system 10 in this example, has been represented by a single block. An associated user interface 12 comprises an interface controller 14, also represented by a single block, and a screen 16 which has been shown in greater detail. The screen 16 serves as a graphical output device of the user interface 12 but may also be configured as a touch-sensitive screen, so that it can serve as an input/output device for entering commands and for displaying messages to be output to a user. In another embodiment, a separate input device may be provided, e.g. in the form of a keyboard and a mouse.

The screen 16 is controlled by the interface controller 14 which is configured for wireless or wired communication with electronic controllers of various components of the printing system 10.

It will be noted that the user interface 12 may for example be formed by a wireless mobile device such a smartphone with a suitable software application loaded therein and configured for wireless communication with the printing system 10.

In the example shown in Fig. 1, the display area of the screen 16 is divided into a control bar 18 at the top margin and a number of frames 20 which are reserved for displaying various display items. The display items may comprise for example general information on the printing system, status information on each of a plurality of printers in the printing system 10, information on available print and finishing options, a list of print jobs presently waiting for being processed in the printing system 10, a media loading schedule, a print job schedule, possibly with more detailed information on each print job, and the like.

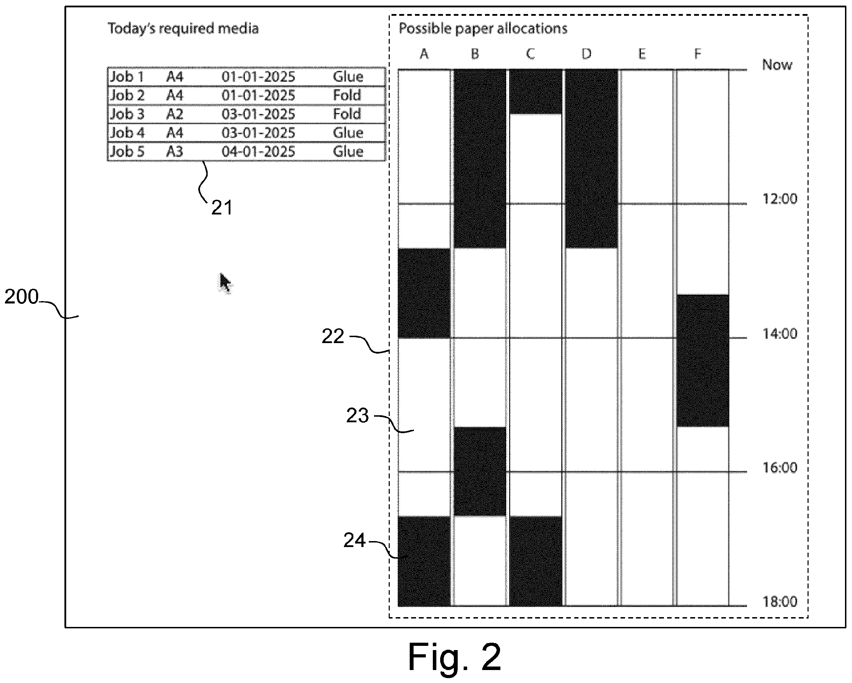

Figs. 2 - 4 show examples of a user interface screen according to the present invention.

Fig. 2 shows a user interface screen 200 of a media loading planning system for a printer. The user interface screen 200 shows two panes 21, 22. The first pane 21 comprises a list of display items representing the print jobs in a printer queue as data objects. The second pane 22 represents a time schedule with a number of columns with blocks of time for each input holder of the printer. The blocks of time are display items representing time slots per input holder for loading the media for the print jobs displayed in the first frame 21. The time slots are the data objects in this case. The printer has a plurality of possible input holders for holding print media. In this example there are six input holders shown in columns A - F, but according to the present invention any plurality of input holders may be envisioned. The time schedule 22 shows the possible print media allocations in time along a time axis for each of the input holders shown as columns A - F. The user interface 200 also shows the list 21 of a plurality of print jobs with printing and finishing properties. In this example the list 21 comprises five print jobs 1 - 5, but according to the present invention any plurality of print jobs may be envisioned. The time schedule 22 shows free slots 23 (white coloured) for print jobs and occupied slots 24 (black coloured) by print jobs. No associations by means of user interaction like a user selection of a print job are revealed.

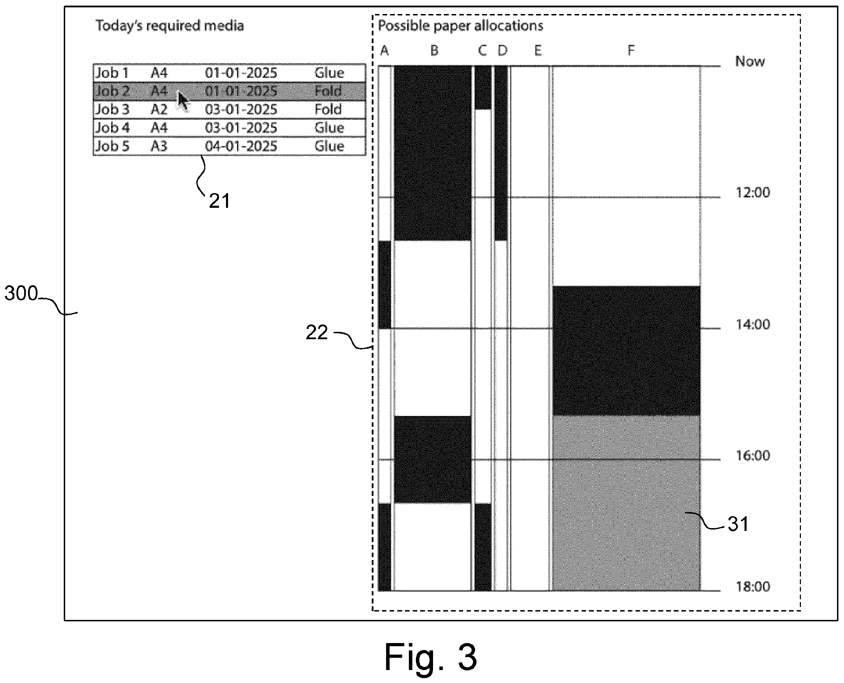

Fig. 3 shows a user interface screen 300 similar to user interface screen 200. The difference between user interface screen 200 in Fig. 2 and user interface screen 300 in Fig. 3 is that an association is revealed. The revealed association is a selection by the user of print job 2. The selection is indicated by a coloured item for print job 2 in the list 21. Due to the selection of print job 2 the print controller directs its focus on data object "print job 2". The print controller invokes a determination of a scoring for the window of opportunity for print job 2 for each input holder of the printer, even for each free time slot in the columns A - F related to the input holders.

The determination of the scoring of the level of the window of opportunity for this example is matching the time duration of the time slot and the kind of print media in the input holder and also the number of media changes during the day. A relative change of size of the frames is indicated and works as a signaller. For example, the totally free column E is less suitable than column F (from about 15:30 onwards) which would with 'normal' visualisation be easy to miss. It could also be that this print job has the same finisher destination and therefor should be in the column F and not in the column E. So media type based, media changes, next-work cell destination like finishers, application types, workflows, change-over time, media capacity of a source may influence the determination of the window of opportunity.

In the time schedule 22 the width of the columns A - F are adapted according to the level of the window of opportunity for each of the input holders. In this case the window of opportunity for the input holder in column F is the largest. Therefore the width of the column F is adapted to be the largest of the widths of all columns A - F. The widths of the columns F, B, E, C, A, D have decreasing widths in accordance with the decreasing levels of the window of opportunity for the respective input holders.

A time slot 31 in the highest scoring column F is indicated by a blue colour to be the free slot with the highest scoring for the window of opportunity for print job 2. The time slot 31 has a duration of approximately 2 hours and 40 minutes. Column F is widening relative to the window of opportunity which comprises a match factor in this case. Columns B and E also present a larger window of opportunity, i.e. the match factor, but the windows of opportunity of the columns E and B are less ideal than the window of opportunity of column F.

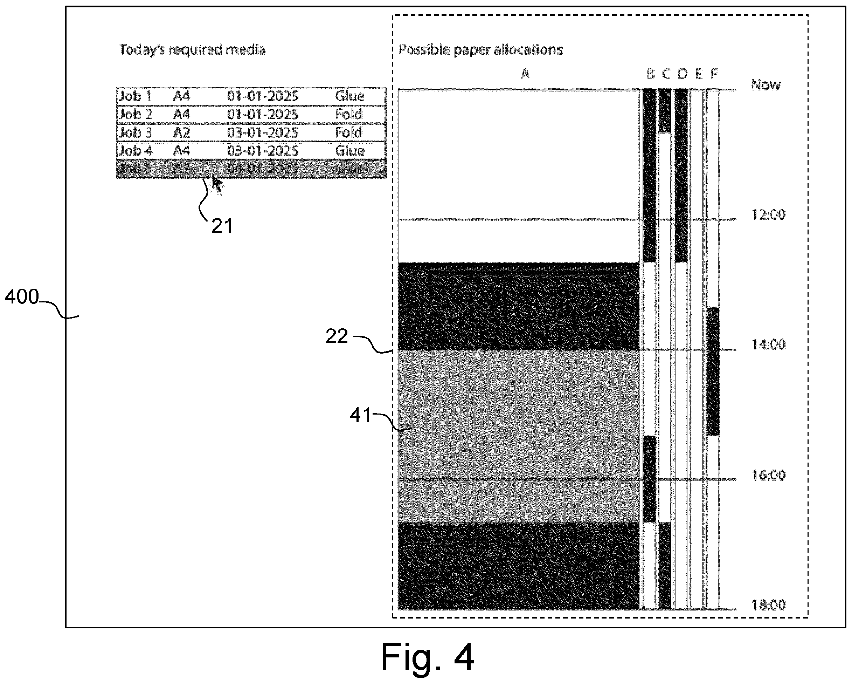

Fig. 4 shows a user interface screen 400 similar to user interface screen 200. The difference between user interface screen 200 in Fig. 2 and user interface screen 400 in Fig. 4 is that an association is revealed. The revealed association is a selection by the user of print job 5. The selection is indicated by a coloured item for print job 5 in the list 21. Due to the selection of print job 5 the print controller directs its focus on data object "print job 5". The print controller invokes a determination of a scoring for the window of opportunity for print job 5 for each input holder of the printer, even for each free time slot in the columns A - F related to the input holders. In the time schedule 22 the width of the columns A - F are adapted according to the level of the window of opportunity for each of the input holders. In this case the window of opportunity for the input holder in column A is the largest. Therefore the width of the column A is adapted to be the largest of the widths of all columns A - F. The widths of the other columns B, C, D, E, F have a smaller width than the width of column A in accordance with the lower level of the window of opportunity for the respective input holders.

A time slot 41 in the highest scoring column A is indicated by a blue colour to be the free slot with the highest scoring for the window of opportunity for print job 5. The time slot 41 has a duration of approximately 2 hours and 40 minutes. Column A is widening relative to the window of opportunity which comprises a match factor in this case. Columns B - F also present a minimum window of opportunity, i.e. the match factor is zero. The windows of opportunity of the columns B - F are not available.

The time schedules 22 in Fig. 2 - 4 start at the top with the moment in time "Now" and are automatically changing in time. Therefore a window of opportunity may also be dynamically changed during the day. The time schedules 22 represent a working day. However according to the present invention other time scales like weeks or months may be envisioned, for example for other scheduling needs for the printer such as a maintenance schedule for servicing the printer by a service technician.

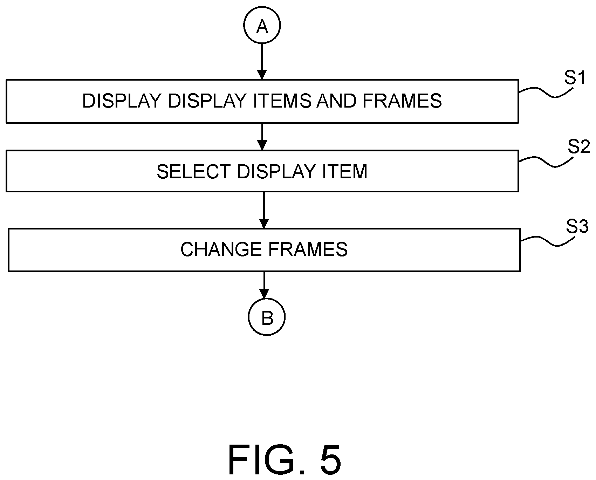

Fig. 5 illustrates a flow diagram of a method according to the present invention. The method is suitable for a printer having a user interface according to the present invention.

The method starts in a starting point A which leads to a first step S1.

In the first step S1 the user interface simultaneously displays the display items, related to data objects, on the user interface screen. The frames for schedules or alike are also displayed related to the display items.

In a second step S2 a display item related to a data object is selected. Selection may take place on the user interface by means of touch of or a mouse click on the display item by the user or operator of the printer.

In a third step S3 the sizes of the frames on the user interface screen are automatically and relatively changed according to the changed window of opportunity for the data object. The window of opportunity is changed due to the selection od the display item related to the data object.

The method ends in an end point B.

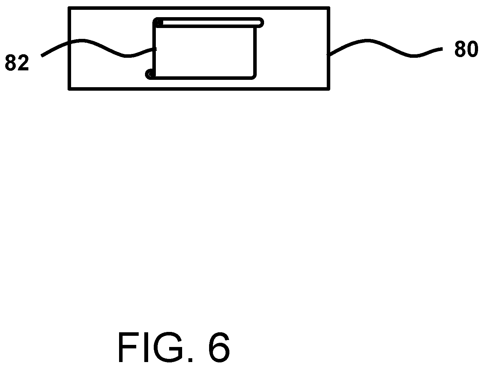

Fig. 6 schematically shows a non-transitory software medium 80 according to the invention. The software medium 80 comprises executable code 82 configured to, when executed, perform the method according to the invention, e.g. as described with respect to either the user interface shown in Fig. 1 or the method of controlling the user interface according to the present invention shown in Fig. 5 and/or according to any of the variants and modifications of the user interface and/or of the method described herein.

The non-transitory software medium 80 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the scope of the present invention, and all such modifications as would be obvious to one skilled in the art are intended to be included within the scope of the following claims.

## Claims

1. A user interface (12) for a printer, the user interface (12) having a screen (16) and being arranged to display a plurality of display items on the screen (16) simultaneously in a configurable layout, the layout specifying at least one of a selection of display items to be displayed simultaneously and a configuration of frames (20) to be displayed that are related to the display items, wherein each display item is related to a data object for a printing device and wherein each data object has a fluent level relative to a window of opportunity for an efficient use of the printing device, and
wherein a size of a frame dynamically corresponds to the fluent level relative to the window of opportunity of a data object related to a selected display item.

2. A user interface according to claim 1, wherein a first dimension of each frame is time related and a second dimension of each frame is automatically scaled upon a relative change of the window of opportunity due to a selection of a display item related to a data object and relatively to sizes of the other frames.

3. A user interface according to claim 2, wherein the second dimension of the frame is a width or a length of the frame.

4. A user interface according to claim 3, wherein an increase of the width of the frame results in a decrease of a width of at least one neighbouring frame and a decrease of the width of the frame results in an increase of a width of at least one neighbouring frame.

5. A user interface according to claim 4, wherein a total width of the frames remains the same after the increase or decrease of the width of the frame.

6. A user interface according to claim 3, wherein an increase of the length of the frame results in a decrease of a length of at least one neighbouring frame and a decrease of the length of the frame results in an increase of a length of at least one neighbouring frame.

7. A user interface according to claim 6, wherein a total length of the frames remains the same after the increase or decrease of the length of the frame.

8. A method for a printer having a user interface according to any of the preceding claims, wherein the method comprises the steps of simultaneously displaying the display items and the frames, selecting a display item related to a data object, and automatically and relatively scaling the size of the frames according to the changed window of opportunity for the data object.

9. A printer comprising a user interface according to any of the claims 1 - 7, wherein the printer comprises a print controller for controlling the printing of print jobs, and a print engine to eject marking material on print media prescribed by the print jobs, and wherein the print controller controls the scheduling and printing of the print jobs as data objects related to display items shown on the user interface screen, and wherein the print controller is configured to execute the steps of a method according to claim 8.

10. A software product comprising program code (52) on a machine-readable medium (50), which program code (52), when loaded into a control system of a printer having a user interface according to any of the claims 1 - 7, causes the printer to execute the steps of the method according to claim 8.
